# EUROPÄISCHE PATENTSCHRIFT

(11) **EP 1 046 623 B1**
(45) Veröffentlichungstag und Bekanntmachung des Hinweises auf die Patenterteilung: **12.05.2010**
(21) Anmeldenummer: 99107943.5
(22) Anmeldetag: 22.04.1999
(51) Int. Cl.: C05D 3/00

(54) **Verfahren zur Herstellung von schwefelhaltigen Kalkdüngern**
Process for the obtention of sulphur containing lime fertilizers
Procédé d'obtention des engrais à base de chaux contenant du soufre

(43) Veröffentlichungstag der Anmeldung: 25.10.2000
(73) Patentinhaber: GFR Gesellschaft für die Aufbereitung und Verwertung von Reststoffen mbH, 97080 Würzburg (DE)
(72) Erfinder: Demmich, Jörg Dr. Ing., 97084 Würzburg (DE); Weissflog, Eckhard Dr., 97234 Lindflur (DE); Leininger, Gerhard, 97271 Kleinrinderfeld (DE); Leimkötter, Dieter, 97209 Veitshöchheim (DE)
(74) Vertreter: von Kreisler Selting Werner

(56) Entgegenhaltungen:
- DE-A- 3 738 938
- DE-A- 3 921 805
- US-A- 5 468 277

## Beschreibung

Gegenstand der vorliegenden Erfindung ist ein Verfahren zur Herstellung von festen, rieselfähigen, schwefelhaltigen Kalkdüngern aus Calciumsulfit enthaltenden trockenen Produkten aus Rauchgasentschwefelungsanlagen.

Aus der DE-A-196 44 612 ist ein Verfahren zur Herstellung von festen, rieselfähigen, vorzugsweise pelletisierten Düngemitteln aus trockenen Abfällen bekannt, die als Düngemittel oder Düngemittelzusätze geeignet sind unter Verwendung von Wasser, wobei das Wasser in Form von schlammförmigen Abfällen eingebracht wird und wobei die Mengen an trockenem Abfall einerseits und schlammförmigem Abfall andererseits so gewählt werden, daß eine zusätzliche nachträgliche Trocknung vermieden wird.

Als trockene Abfälle werden dabei außer Klärschlammverbrennungsaschen, Wirbelschichtaschen, Holzverbrennungsaschen, Aschen aus der Verbrennung von Papierreststoffen sowie Schleif- und Schneidstäube aus der Verarbeitung von Kalkstein, Dolomit, Gips und Talk auch trockene Produkte aus Rauchgasentschwefelungsanlagen verwendet. Es ist bekannt, daß derartige trockene Produkte aus Rauchgasentschwefelungsanlagen - insbesondere aus Sprühabsorptionsverfahren (SAV) - erhebliche Mengen, meistens sogar überwiegend Calciumsulfit enthalten neben relativ geringen Mengen Calciumsulfat und sehr schwankenden Mengen an Flugasche.

Aus einer Untersuchung des Instituts für Bodenkunde und Pflanzenernährung, Bundesforschungsanstalt für Landwirtschaft in Braunschweig (S. Haneklaus, H.M. Paulsen, E. Schnug, VGB-Kraftwerkstechnik 76, (1996) 676) ist bekannt, daß die überwiegend Calciumsulfit enthaltenden Entschwefelungsprodukte aus Sprühabsorptionsverfahren prinzipiell geeignet sein sollten, auch als Düngemittel eingesetzt zu werden. Gemäß einer Publikation von J. Mortensen und D.B. Nielsen, Zeitschrift für Pflanzenemährung und Bodenkunde 158 (1995) 117-119, wird das Sulfit im Boden innerhalb von zwei Wochen vollständig zu Sulfat oxidiert. Weiterhin wird gemäß H.M. Paulsen, S. Haneklaus, E. Schnug, VGB-Tagung, Band 233, 16 (1998) durch Calciumsulfit und Calciumsulfat der pH-Wert des Bodens nicht beeinflußt. Weiterhin wird von Paulsen et al. berichtet, daß die basischen Bestandteile, die bei der Nutzung von SAV-Produkten als Schwefeldünger zusammen mit den Materialien ausgebracht werden, zu gering sind, um einen bedeutenden pH-Effekt zu erzielen. Schließlich kommen Paulsen et al. zu der Schlußfolgerung, daß Schwefeldünger vorzugsweise zusammen mit Stickstoffdüngern verwendet werden sollten, da diese für ein optimales Pflanzenwachstum zur gleichen Zeit benötigt werden. Sulfatdünger und/oder Sulfitdünger sollten somit nach Möglichkeit zusammen mit einem Stickstoffdünger zur Anwendung kommen.

J. Kolar in VGB Kraftwerkstechnik 75(1995) Seiten 167-173 offenbart, dass in Dänemark ein Gemisch aus SAV-Produkt/ Dolomit als Düngemittel zugelassen wurde.

Gehalte an Calcium sulfite und Dolomit sind nicht beschrieben.

Die Erfindung hat sich somit die Aufgabe gestellt, aus erheblichen Mengen, vorzugweise überwiegend Calciumsulfit enthaltenden trockenen Produkten aus Rauchgasentschwefelungsanlagen feste, rieselfähige Düngemittel herzustellen, die zu einer problemlosen, umweltgerechten und für das Pflanzenwachstum optimierten Anwendung geeignet sind, zu einer möglichst hohen Ausnutzung des dem Boden zugeführten Schwefels führen und die Auswaschverluste so gering wie möglich hält.

Überraschenderweise wurde jetzt festgestellt, daß dies möglich ist, wenn diese aus überwiegend Calciumsulfit enthaltenden trockenen Produkte aus Rauchgasentschwefelungsanlagen mit mindestens 30 MA.-%, vorzugsweise mindestens 50 MA.-% den pH-Wert des zu düngenden Bodens erhöhenden Mengen an feinteiligen Kalkprodukten und/oder Dolomit vermischt eingesetzt werden. Vorzugsweise werden die Gemische unter Zusatz von Wasser oder wässrigen Suspensionen granuliert oder pelletisiert.

Es wurde jetzt festgestellt, daß durch derartige Gemische, vorzugsweise in Form von Granulaten und Pellets, die Freisetzung, Oxidation und Anflutung des Schwefels in Form von Sulfat über einen längeren Zeitraum verteilt wird, so daß der Schwefel praktisch während der gesamten Wachstumsperiode zur Verfügung steht. Eine nachträgliche Erklärung dieser überraschenden Ergebnisse ist darin zu sehen, daß die Löslichkeit von Calciumsulfit gegenüber Calciumsulfat bei neutralen oder basischen pH-Werten nur ca. ein Fünfzigstel beträgt. Die Oxidation des Sulfits zum Sulfat findet aber nur in der gelösten Phase statt. Die unmittelbare Nachbarschaft von erfindungsgemäß zugesetzten Kalkprodukten und/oder Dolomit zu den Gemischen und insbesondere in den Granulaten und Pellets führt zu höheren pH-Werten, was wiederum die Löslichkeit von Calciumsulfit auf niedrigem Niveau stabilisiert und zu einer weiteren Verzögerung der Oxidation des Sulfits zum Sulfat führt, so daß aus diesen erfindungsgemäß hergestellten Gemischen der Schwefel nur sehr langsam und über einen langen Zeitraum verteilt angeflutet wird. Zudem ist auch die Sulfatlöslichkeit dieser trockenen Produkte aus Rauchgasentschwefelungsanlagen gegenüber reinem Calciumsulfat (z.B. Gips) stark herabgesetzt. Dies liegt vermutlich darin begründet, daß im Gegensatz zu Gips Mischkristalle und spezielle Partikelformen vorliegen, die ein Herauslösen des Calciumsulfats erschweren. Elutionsversuche zeigen, daß die Sulfatlöslichkeit bei ca. 450 mg/l gegenüber ca. 1500 mg/l bei Gips liegt.

Da bekannt ist, daß Flugasche relativ hohe Mengen an Schwermetallen und unerwünschten Verunreinigungen enthält, sollten die erfindungsgemäß hergestellten Düngemittel insgesamt weniger als 8 MA.-% Flugasche enthalten.

Die erfindungsgemäß hergestellten Granulate oder Pellets können zwar im einfachsten Fall durch Zusatz von Wasser hergestellt werden. Es ist jedoch ein wesentlicher Vorteil des erfindungsgemäßen Verfahrens, daß statt Wasser auch wässrige Suspensionen verwendet werden können, die kalkhaltige Abfälle enthalten. Besonders geeignet sind dabei kalkhaltige Abfälle aus der Brauch-, Trink- und Prozeßwasseraufbereitung, der Zuckerherstellung, der Acetylenproduktion oder Gelatineherstellung.

Ein weiterer Vorteil des erfindungsgemäßen Verfahrens besteht darin, daß bei exakter Dosierung der Wasser- oder Suspensionsmenge die Granulate oder Pellets hergestellt werden können, ohne anschließend noch einer Trocknung unterzogen zu werden.

Weiterhin ist es erfindungsgemäß durchaus möglich, den Gemischen vor der Granulierung oder Pelletisierung gewisse Mengen an weiteren Pflanzennährstoffen oder pflanzennährstoffhaltigen Abfällen zuzugeben, so daß eine separate Ausbringung dieser Pflanzennährstoffe unterbleiben kann. Im Gegensatz zu der ursprünglich gemäß Stand der Technik empfohlenen gemeinsamen Ausbringung mit Stickstoffdüngern, welche häufig sogar noch zu einer Absenkung des pH-Wertes führt, sollten für die erfindungsgemäß hergestellten Granulate und Pellets nur stickstoffhaltige Abfälle verwendet werden, die keine Ammoniumsalze oder Ammoniak enthalten, da aus diesen durch die pH-Wert-erhöhenden Komponenten unerwünscht früh Ammoniak freigesetzt werden kann. Geeignet sind aber Abfälle, die ihren Stickstoffgehalt nur sehr langsam abgeben, nämlich protein- oder keratinhaltige Abfälle.

Vergleichende Untersuchungen der Düngung mit Calciumsulfit enthaltenden trockenen Produkten aus Rauchgasentschwefelungsanlagen alleine mit solchen, die den pH-Wert des zu düngenden Bodens erhöhende Mengen an feinteiligen Kalkprodukten und/oder Dolomit enthalten oder sogar obendrein granuliert oder pelletisiert sind, haben ergeben, daß mit den zuletzt genannten Produkten wesentlich bessere Effekte erzielbar sind und die so erhaltenen Düngemittel überlegen sind gegenüber Düngemitteln, die überwiegend Calciumsulfat oder Ammoniumsulfat enthalten. Insbesondere ist die unerwünschte Auswaschung in tiefere Bodenschichten stark verringert. Ein weiterer Vorteil besteht darin, daß die erfindungsgemäß hergestellten Düngemittel sehr preiswert sind und die hochwertige stoffliche Verwertung von bisher nur deponierten oder als Versatzmaterial verwerteten Abfallstoffen gestatten.

In den nachfolgenden Beispielen sind typische erfindungsgemäß hergestellte Kalkdünger beschrieben. Aus den Vergleichsdaten geht hervor, daß die erfindungsgemäß hergestellten Kalkdünger eine wesentlich höhere Nutzungsrate des angebotenen Schwefels gewährleisten, so daß wesentlich weniger unverbrauchter Schwefel in untere Bodenschichten ausgewaschen wird und damit das Grundwasser belasten kann.

Die Beispiele wurden durchgeführt mit zwei verschiedenen Calciumsulfit enthaltenden trockenen Produkten aus Sprühabsorptionsverfahren (SAV), von denen der Typ 1 relativ viel (nahezu 50 MA.-%) Calciumcarbonat und Calciumhydroxid enthielt und der Typ 2 überwiegend Calciumsulfithalbhydrat enthielt.

Die Zusammensetzungen dieser Produkte waren im einzelnen:

### SAV-Produkt 1:

**1. Mineralogische Zusammensetzung:**

| **Parameter** | **Dimension** | **Ergebnis** |
|---|---|---|
| Calciumsulfit-Halbhydrat | MA.-% | 41,5 |
| Calciumcarbonat | MA.-% | 32,8 |
| Calciumhydroxid | MA.-% | 15,6 |
| Calciumsulfat-Halbhydrat | MA.-% | 5,0 |
| Calciumchlorid | MA.-% | 1,6 |
| Inertes | MA.-% | 1,0 |

**2. Nährstoffe**

| **Parameter** | **Dimension** | **Ergebnis** |
|---|---|---|
| Schwefel | MA.-% | 11,4 |
| Calciumoxid gesamt | MA.-% | 50,9 |
| Calciumoxid basisch | MA.-% | 30,7 |
| Magnesiumoxid | MA.-% | 0,5 |

**3. Physikalische Parameter**

| **Parameter** | **Dimension** | **Ergebnis** |
|---|---|---|
| Farbe | -- | weiß |
| Geruch | -- | Ohne |
| pH-Wert | -- | 12,2 |
| Schüttdichte | g/l | 650 |
| Feuchte (40° C) | MA.-% | 0,8 |

**4. Schwermetalle**

| **Parameter** | **Dimension** | **Meßwert** |
|---|---|---|
| Arsen | mg/kg TS | 5,3 |
| Blei | mg/kg TS | 80 |
| Cadmium | mg/kg TS | 2,5 |
| Chrom | mg/kg TS | 5 |
| Kupfer | mg/kg TS | 14 |
| Nickel | mg/kg TS | 5 |
| Quecksilber | mg/kg TS | 2,3 |
| Thallium | mg/kg TS | 4,8 |
| Zink | mg/kg TS | 109 |

### SAV-Produkt 2:

**1. Mineralogische Zusammensetzung:**

| **Parameter** | **Dimension** | **Ergebnis** |
|---|---|---|
| Calciumsulfit-Halbhydrat | MA.-% | 63,2 |
| Calciumcarbonat | MA.-% | 20,9 |
| Calciumhydroxid | MA.-% | 3,0 |
| Calciumsulfat-Halbhydrat | MA.-% | 1,9 |
| Calciumchlorid | MA.-% | 5,1 |
| Inertes | MA.-% | 4,0 |

**2. Nährstoffe**

| **Parameter** | **Dimension** | **Ergebnis** |
|---|---|---|
| Schwefel | MA.-% | 16,1 |
| Calciumoxid gesamt | MA.-% | 44,7 |
| Calciumoxid-basisch | MA.-% | 13;9 |
| Magnesiumoxid | MA.-% | 0,5 |

**3. Physikalische Parameter**

| **Parameter** | **Dimension** | **Ergebnis** |
|---|---|---|
| Farbe | -- | weiß |
| Geruch | -- | Ohne |
| pH-Wert | -- | 12,0 |
| Schüttdichte | g/l | 580 |
| Feuchte (40° C) | MA.-% | 0,1 |

**4. Schwermetalle**

| **Parameter** | **Dimension** | **Meßwert** |
|---|---|---|
| Arsen | mg/kg TS | 1 |
| Blei | mg/kg TS | <5 |
| Cadmium | mg/kg TS | <0,5 |
| Chrom | mg/kg TS | 5 |
| Kupfer | mg/kg TS | 6 |
| Nickel | mg/kg TS | 5 |
| Quecksilber | mg/kg TS | 0,13 |
| Thallium | mg/kg TS | < 0,1 |
| Zink | mg/kg TS | 28 |

### Beispiel 1:

| **Kohlensaurer Magnesiumkalk mit Schwefel** | | |
|---|---|---|
| Rezeptur: | 25 MA.-% SAV-Produkt Typ 1 | |
| | 75 MA.-% Dolomitmehl | |
| Erzeugnis: | Kohlensaurer Magnesiumkalk 75 mit Schwefel 3 | |
| Zusammensetzung: | Calciumcarbonat | 60 MA.-% |
| | Magnesiumcarbonat: | 15 MA.-% |
| | Schwefel | 3 MA.-% |

### Beispiel 2:

| **Branntkalk mit Schwefel** | | |
|---|---|---|
| Rezeptur: | 33 MA.-% SAV-Produkt Typ 2 | |
| | 67 MA.-% Branntkalk | |
| Erzeugnis: | Branntkalk 65 mit Schwefel 5 | |
| Zusammensetzung: | Calciumoxid: | 65 MA.-% |
| | Schwefel | 5 MA.-% |

### Beispiel 3:

| **Kohlensaurer Kalk mit Schwefel und Natrium** | | |
|---|---|---|
| Rezeptur: | 5 MA.-% Kochsalz | |
| | 28 MA.-% SAV-Produkt Typ 2 | |
| | 67 MA.-% Kalksteinmehl | |
| Erzeugnis: | Kohlensaurer Kalk 75 mit Schwefel 3 und Natrium 2 | |
| Zusammensetzung: | Calciumcarbonat: | 75 MA.- % |
| | Schwefel: | 3 MA.-% |
| | Natrium | 2 MA.-% |

### Beispiel 4:

| **Kohlensaurer Kalk mit Phosphat und Schwefel** | | |
|---|---|---|
| Rezeptur: | 25 MA.-% Gelatineschlamm | |
| | 15 MA.-% SAV-Produkt Typ | 1 |
| | 60 MA.-% Dolomitmehl | |
| Erzeugnis: | Kohlensaurer Magnesiumkalk 65 mit Phosphat 3 und Schwefel 2 | |
| Zusammensetzung: | Calciumcarbonat: | 40 MA.-% |
| | Magnesiumcarbonat | 25 MA.-% |
| | Phosphat als P₂O₅ | 3 MA.-% |
| | Schwefel | 2 MA.-% |

### Beispiel 5:

| **Kohlensaurer Magnesiumkalk mit Schwefel, granuliert** | |
|---|---|
| Rezeptur: | 20 MA.- % SAV-Produkt Typ 2 |
| | 80 MA.- % Dolomitmehl |
| Hilfsmittel: | 5-15 MA.- % *Wasser |
| | 3-9 MA.- % * Teile Melasse bzw. |
| | 5-15 MA.- % * Teile Magnesiumchloridlösung 35% ig |
| | * Bezugsgröße: Mischung SAV-Produkt Typ 2 + |
| | Dolomitmehl = 100 % |

Eine aus einem Teil SAV-Produkt Typ 2 und vier Teilen Dolomitmehl erzeugte Mischung wird mit 5-15 MA -% bezogen auf die Gesamtmischung an Dolomit und SAV-Produkt angefeuchtet. Dieses Gemenge wird unter Zuhilfenahme von Melasse (3-9 MA.-%) bzw. Magnesiumchloridlösung (5-15 MA.-%) auf einem Granulierteller granuliert. Die Granalien werden anschließend getrocknet.

| | | |
|---|---|---|
| Erzeugnis: | Kohlensaurer Magnesiumkalk 75 mit Schwefel 3 | |
| Zusammensetzung: | Calciumcarbonat: | 60 MA.- % |
| | Magnesiumcarbonat | 15 MA.- % |
| | Schwefel | 3 MA.- % |

### Beispiel 6:

### Untersuchung der Ausnutzung des angebotenen Schwefels bei erfindungsgemäß hergestellten Kalkdüngern im Vergleich zu Kalkdüngern nach dem Stand der Technik

Die Untersuchungen wurden durchgeführt bei einem Boden mit einem pH-Wert von 5,4. Gedüngt wurde jeweils mit einer Menge, die 1,0 mg SO₄-S/100g Boden entsprach. Die Ausnutzung der Schwefeldüngung wurde ermittelt durch Perkolationsversuche und Ermittlung des Mehrentzuges des Schwefelgehaltes durch die wachsenden Pflanzen.

Als Vergleich und Ausgangsbasis wurde dieser Boden gedüngt mit Gips (Calciumsulfat x 2 H₂O) welcher 18 % Schwefel enthält. Bei einer derartigen Düngung mit Gips wird durch die Pflanzen dem Boden 13 % des mit dem Gips zugeführten Schwefels entzogen. Bei einer Düngung mit der doppelten Menge Gips wird durch Pflanzenwachstum dem Boden nur noch 21 % des zugeführten Schwefels entzogen. Es steht somit bereits ein wesentlich höherer Anteil an Schwefel für die Auswaschung in tiefere Bodenschichten zur Verfügung.

Bei einer Düngung dieses Bodens mit dem unverdünnten SAV-Produkt Typ 2 wird ebenfalls dem Boden nur 13 % des zugeführten Schwefels entzogen. Dies bestätigt die früheren bisher veröffentlichten Befunde, daß "reines" Calciumsulfit zu praktisch gleichen Düngewirkungen führt wie Calciumsulfat.

Bei Düngung mit einem Gemisch gemäß Beispiel 1 erhöht sich bereits die Nutzungsrate des angebotenen Schwefels auf 20 %.

Bei einer Düngung mit einem Material gemäß Beispiel 2 steigt die Nutzungsrate des angebotenen Schwefels auf 29 %.

Bei einer Düngung mit einem granulierten Gemisch gemäß Beispiel 5 steigt die Nutzungsrate des angebotenen Schwefels auf 67 %.

Diese Untersuchungen belegen eindeutig die düngerelevanten aber auch die umweltrelevanten (Minimierung von Auswascheffekten) Vorteile des erfindungsgemäßen Verfahrens.

## Patentansprüche

1. Verfahren zur Herstellung von festen, rieselfähigen schwefelhaltigen Kalkdüngern aus überwiegend Calciumsulfit enthaltenden trockenen Produkten aus Rauchgasentschwefelungsanlagen, **dadurch gekennzeichnet, dass** diese Produkte mit mindestens 30 MA.-%, bezogen auf den Kalldünger, den pH-Wert des zu düngenden Bodens erhöhenden Mengen an feinteiligen Kalkprodukten und/oder Dolomit vermischt werden.

2. Verfahren gemäß Anspruch 1, **dadurch gekennzeichnet, dass** diese Produkte mit mindestens 50 MA.-% den pH-Wert erhöhenden Mengen an feinteiligen Kalkprodukten und/oder Dolomit vermischt werden.

3. Verfahren gemäß den Ansprüchen 1 oder 2, **dadurch gekennzeichnet, dass** die Gemische unter Zusatz von Wasser oder wässrigen Suspensionen granuliert oder pelletisiert werden.

4. Verfahren gemäß einem der Ansprüche 1 bis 3, **dadurch gekennzeichnet, dass** die Gemische weniger als 8 MA.-% Flugasche enthalten.

5. Verfahren gemäß einem der Ansprüche 1 bis 4, **dadurch gekennzeichnet, dass** als wasserhaltige Suspensionen kalkhaltige Abfälle aus der Brauch-, Trink- und Prozeßwasseraufbereitung, der Zuckerherstellung, der Acetylenproduktion oder Gelatineherstellung verwendet werden.

6. Verfahren gemäß einem der Ansprüche 1 bis 5, **dadurch gekennzeichnet, dass** dem Gemisch weitere Pflanzennährstoffe oder pflanzennährstoffhaltige Abfälle zugegeben werden.

## Claims

1. A process for the preparation of solid free-flowing sulfur-containing lime fertilizers from dry products from flue gas desulfurization plants predominantly containing calcium sulfite, **characterized in that** said products are admixed with at least 30 mass percent, based on the lime fertilizer, of finely divided lime products and/or dolomite in amounts increasing the pH of the soil to be fertilized.

2. The process according to claim 1, **characterized in that** said products are admixed with at least 50 mass percent of finely divided lime products and/or dolomite in amounts increasing the pH.

3. The process according to claims 1 or 2, **characterized in that** said mixtures are granulated or pelletized with the addition of water or aqueous suspensions.

4. The process according to any of claims 1 to 3, **characterized in that** said mixtures contain less than 8 mass percent of fly ash.

5. The process according to any of claims 1 to 4, **characterized in that** lime-containing waste products from the processing of industrial, drinking and process water, from sugar production, acetylene production or gelatin production are used as aqueous suspensions.

6. The process according to any of claims 1 to 5, **characterized in that** further plant nutrients or waste products containing plant nutrients are added to said mixture.

## Revendications

1. Procédé de fabrication d'engrais à base de chaux riches en soufre, fluides, solides, à partir de produits secs provenant d'installations de désulfuration des gaz de fumée contenant principalement du sulfite de calcium, **caractérisé en ce que** ces produits sont mélangés, par rapport à l'engrais potassique, avec au moins 30% en masse de produits calcaires finement divisés et/ou de dolomite qui augmentent la valeur de pH du sol à fertiliser.

2. Procédé selon la revendication 1, **caractérisé en ce que** ces produits sont mélangés avec au moins 50% en masse de produits calcaires finement divisés et/ou de dolomite qui augmentent la valeur de pH du sol à fertiliser.

3. Procédé selon les revendications 1 ou 2, **caractérisé en ce que** les mélanges sont granulés ou transformés en boulettes en ajoutant de l'eau ou des suspensions aqueuses.

4. Procédé selon l'une quelconque des revendications 1 à 3, **caractérisé en ce que** les mélanges contiennent moins de 8% en masse de cendres volantes.

5. Procédé selon l'une quelconque des revendications 1 à 4, **caractérisé en ce que** l'on met en oeuvre en tant que suspensions aqueuses des déchets contenant du calcaire provenant du traitement des eaux industrielles, du traitement des eaux potables et du traitement des eaux des procédés, de la production du sucre, de la production de l'acétylène ou de la production de gélatine.

6. Procédé selon l'une quelconque des revendications 1 à 5, **caractérisé en ce que** d'autres substances nutritives pour les plantes ou déchets contenant des substances nutritives pour les plantes sont ajoutés au mélange.
